# EUROPEAN PATENT SPECIFICATION

(11) **EP 0 881 745 B1**
(45) Date of publication and mention of the grant of the patent: **11.12.2002**
(21) Application number: 98109571.4
(22) Date of filing: 26.05.1998
(51) Int. Cl.: H02K 3/12, H02K 19/22, H02K 15/00, H02K 15/12, H02K 3/02

(54) **Rotary electric machine**
Elektrische Drehmaschine
Machine électrique rotative

(30) Priority: 26.05.1997 WO PCT/JP97/01778; 22.09.1997 WO PCT/JP97/03374; 26.09.1997 JP 27975097; 26.09.1997 JP 27975197; 26.09.1997 JP 27975297; 14.10.1997 JP 29788297; 24.10.1997 JP 30973197; 10.12.1997 JP 36206397; 10.02.1998 JP 4439098
(43) Date of publication of application: 02.12.1998
(73) Proprietor: Denso Corporation, Kariya-city, Aichi-pref., 448-8661 (JP)
(72) Inventor: Umeda, Atsushi, Kariya-shi, Aichi 448-8661 (JP); Shiga, Tsutomu, Kariya-shi, Aichi 448-8661 (JP); Kusase, Shin, Kariya-shi, Aichi 448-8661 (JP)
(74) Representative: Winter, Brandl, Fürniss, Hübner, Röss, Kaiser, Polte Partnerschaft

(56) References cited:
- EP-A- 0 727 867
- WO-A-92/06527
- GB-A- 122 741
- GB-A- 2 304 236
- PATENT ABSTRACTS OF JAPAN vol. 015, no. 118 (E-1048), 22 March 1991 & JP 03 007036 A (HITACHI LTD), 14 January 1991

## Description

The present invention relates to a rotary electric machine according to the preamble of claim 1 which is driven by an internal combustion engine mounted in a vehicle such as a passenger car, a truck, or boat.

A rotary electric machine according to the preamble of claim 1 is respectively known from GB 122 741 A and from WO 92 06527 A; each of these publications discloses an electric machine having a rotor composed of magnetic poles alternately disposed at equal intervals in the circumference direction thereof and a stator disposed opposite to the rotor; the stator is composed of a stator core having windings disposed in slots, the windings comprising a conductor member extending in the axial direction of said rotor.

The patent abstract of Japan vol.15, no 118 (E-1048), 22, and the publication JP 030 007036 A each disclose a rotor winding for an electrical rotary machine in which the resistance of the power supply lead wire against the centrifugal force of the rotor is improved by making the hardness at the linear rising section of the lead wire higher than at the curved section thereof. In a rotary machine according to the present invention this particular problem, however, does not exist as the magnetic rotor does not comprise any lead wires.

As noises of vehicles have been reduced, requirement for reducing noises of engine accessories becomes severe. For example, reduction in noises of an alternator, which always operates while the vehicle is running, is severely required. Because the weight of the alternator is also required to be reduced by reducing the thickness of its housing, which may increase magnetic vibrations, the noise reduction of the alternator is very difficult.

In general, the magnetic noise is generated when magnetic change in the gap between a stator and a rotor vibrates the stator core, windings and also frames supporting the stator core thereby to make air wave of condensation and rarefaction. It is well known that if the weight of the stator increases, the noises can be reduced.

JP-B-5-50969 proposes to suppress the magnetic vibration of the stator by increasing the stiffness of the aluminum frame supporting the stator. However, the aluminum frame can not increase the stiffness of the stator directly, and the effect is limited.

JP-A-62-225140 proposes to form a variety of magnetic reluctances in the stator core so as to moderate the vibration frequency generated in the operation, thereby reducing the magnetic noise. This does not reduce the vibration amplitude, and may vibrate various parts surrounding the alternator. Thus, up to now there was no effective structure for reducing the magnetic noise.

The magnetic vibration of the stator may be generated due to resonation although the amplitude of the vibration is rather small. Such vibration may be transmitted to portions of the stator winding extending from the stator core, which amplify noises.

It is the object of the present invention to provide a rotary electric machine which can suppress the vibration of the stator and the magnetic noise.

Another object of the present invention is to suppress resonance of the stator.

Another object of the present invention is to increase an occupation ratio of the conductor members in the slots.

According to the present invention, these objects are solved by the characterizing features of claim 1. Accordingly, the resonance amplitude of the stator can be decreased.

Other objects, features and characteristics of the present invention as well as the functions of related parts of the present invention will become clear from a study of the following detailed description and the drawings. In the drawings:
Fig. 1 is a cross-sectional view of an alternator for a vehicle according to a first embodiment of the present invention;
Fig. 2 is a fragmentary perspective view illustrating U-turn portions of a winding;
Fig. 3 is a cross-sectional view illustrating the stator shown in Fig. 1;
Fig. 4 is a graph showing a distribution of the hardness of the U-turn portions of the winding of the first embodiment in the axial direction;
Fig. 5 is a graph showing a difference in the resonant characteristics between the stator according to the first embodiment and a conventional stator;
Fig. 6 is a graph comparing the magnetic noise of the stator core according to the first embodiment with that of a conventional stator;
Fig. 7 is a perspective view of an axial end of the stator according to a second embodiment of the present invention;
Fig. 8 is a perspective view of the other end of the stator according to the second embodiment;
Fig. 9 is a perspective view of a conductor segment of the stator according to the second embodiment; and
Fig. 10 is a perspective view of a conductor segment according to another embodiment of the present invention.

### [First Embodiment]

A 100-ampere-class alternator for a vehicle according to a first embodiment of the invention is now described with reference to the drawings.

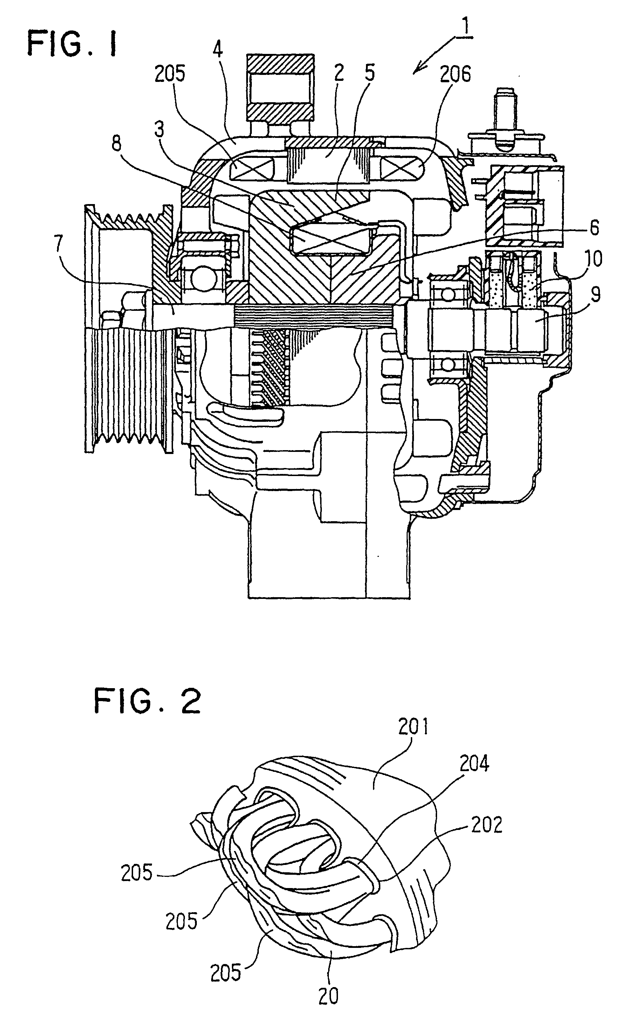

In Fig. 1, an alternator 1 is composed of stator 2 as an armature, a rotor 3 as a magnetic field generator and a frame 4 for supporting the stator 2 and the rotor 3. The frame 4 contains therein a regulator and a rectifier for converting ac power to dc power, which are not shown.

The rotor 3 is composed of a pole core 6 having twelve claw poles 5 and a shaft 7 which is press-fitted into the pole core 6 via its serrated surface. The left end of shaft 7 in Fig. 1 carries a pulley for inputting driving power. The center boss portion of the pole core 6 has a field coil wound therearound. The field coil 8 is connected to the regulator through slip rings 9 and brushes 10. The rotor provides N and S poles alternately from claw poles.

The stator 2 has a stator core 201 provided with 36 slots 202. The stator core 201 is composed of laminated electric steel sheets having a thickness of 0.5 mm. The axial thickness of the stator core 201 is about 30 mm and its outside diameter is about 120 mm.

A portion of continuous copper wire 20 is inserted into each one of slots 202 to form a multi-phase stator winding. As shown in Fig. 2, the copper wire 20 has U-turn portions extending axially from different slots 202. Electric insulating members 204 are disposed between the copper wire 20 and the walls of slots 202. the copper wire 20 is inserted into each slot 202 to hold the insulator members 204 and is fixed therein by an adhesive agent 207. The copper wire 20 has a rectangular cross-section and is coated with resinous insulation material.

The copper wire 20 is processed to have a rectangular cross-section of about 2 mm² all over its length and also to increase the hardness thereof.

A plurality of U-turn portions or coil ends 205, 206 are disposed annularly along the circumferences on the opposite axial ends of the stator core 201. The U-turn portions 205 on the pulley-side are heated and softened above the edge of the U-turn portions 205 through the insulation coating or after removing the insulation coating, as shown in Fig. 2.

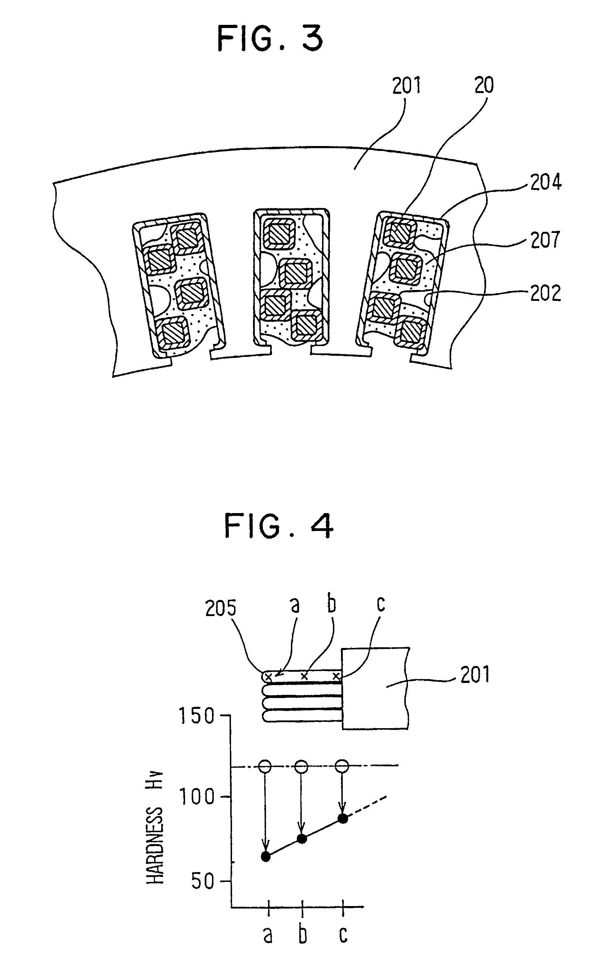

As a result, the hardness of the hardened portions after the above shaping process is reduced, so that different portions of the wire 20 can have a different hardness, as shown in Fig. 4. Thus, the edge of the U-turn portions 205 becomes softer than other portions, and portions closer to the slots become harder. In other words, the U-turn portions 205 on the pulley-side become softer at portions closer to the edge and harder at portions closer to the slots. Further, the U-turn portions 205 of the pulley-side are softer than the other U-turn portions 206.

As a result, the stator 2 has a low vibration-stiffness on the pulley-side thereof and a high vibration-stiffness on the opposite side, thereby providing a difference in the vibration phase therebetween. This moderates and reduces the amplitude of the vibration and reduces the magnetic noise.

Because the hardness of the U-turn portions is changed, the transmission of the vibration from the stator core 201 to the U-turn portions is suppressed so that the magnetic noise, which is generated due to vibration of the U-turn portions, can be suppressed.

Since copper wire is heated after it is processed for shaping, the difference in the hardness can be made bigger than in the case of a round wire. This is effective for the reduction of the vibration and the magnetic noise.

The above described shaping process and heating-and-softening process are very simple and can dispense with special and expensive processes for changing the composition of a wire material along the axis of the stator. Moreover, the heating-and-softening process can be carried out very simply above the edge of the U-turn portions 205.

The shaping process of the copper wire 20 can be carried out very easily, and the hardness of the copper wire 20 can be changed as desired.

The copper wire 20 can be formed from a flat wire on the market if it has a desirable hardness after the shaping process and is not annealed to be softened.

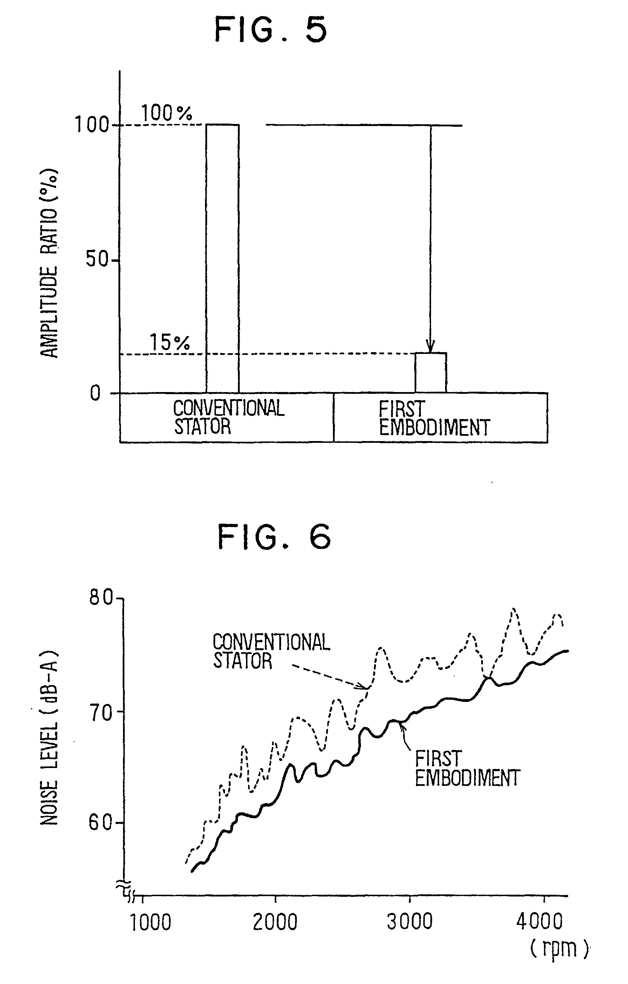

The effect of the above structure is shown in Fig. 5, in which ratios of the resonance amplitude are compared between the stator of the alternator according to the first embodiment and a stator of a conventional 100-ampere-type alternator under the same vibration amplitude. It was found that the ratio of the stator according to the first embodiment was less than 1/6 of the ratio of the conventional stator.

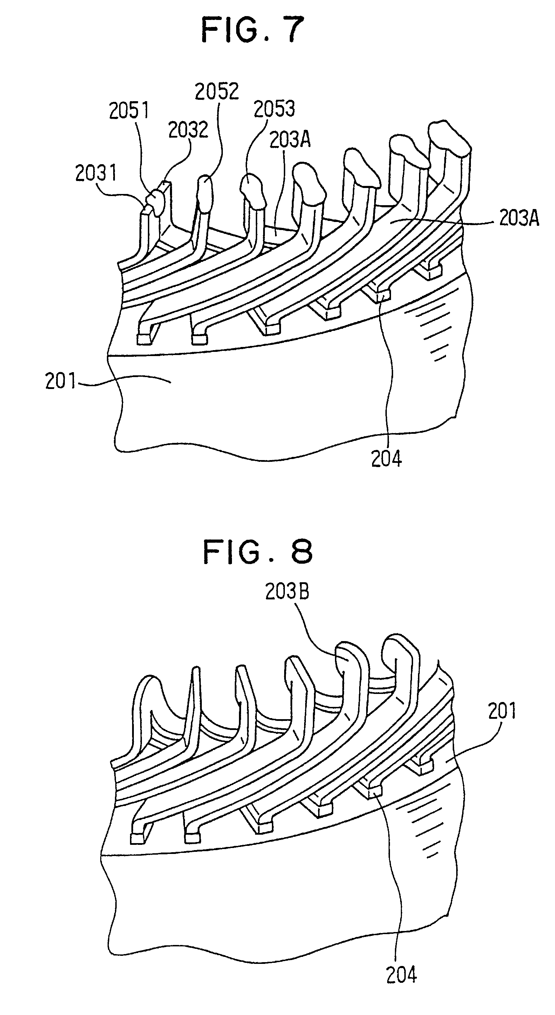

Fig. 6 shows the distribution of the magnetic noises over the number of revolutions per minutes. It is clear that the magnetic noise generated by the alternator according to the first embodiment of the present invention is smaller than a conventional alternator. In general, the magnetic noise generated in the engine speed range from the idling speed to 1500 rpm, which corresponds to the speed range of the alternator from 1000 to 4000 with the pulley ratio being 2.5, is particularly harsh. However, the magnetic noise in this speed range is 5-7 dB less than the noise of the conventional alternator. The alternators according to the first embodiment of types other than 200-ampere-type have the same effect.

### [Second Embodiment]

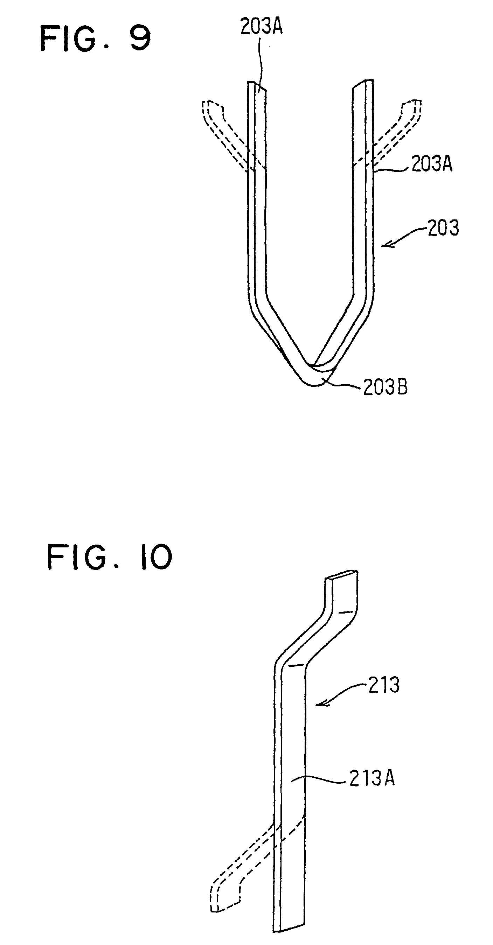

A stator core according to a second embodiment of the present invention how is described with reference to Figs. 7-9. A stator winding is composed of a plurality of conductor segments 203 connected to one another as shown in Fig. 9.

Conductor segments 203 are formed by shaping round wires into flat segments. The shaping process hardens the conductor segments 203. The shape of the conductor segments 203 corresponds to the shape of the cross-section of the slots. The conductor segments 203 are inserted into the slots and connected to form a winding having a high occupation ratio of conductors.

Each of conductor segments 203 has two straight conductor members 203 A and a U-turn portion 203B. As shown in Figs. 7 and 8, the straight conductor members 203A of conductor segments 203 are aligned in the slot 202 in the radial direction. The U-turn portions 203B are disposed on an axial end of the stator core 201. Straight conductor members 203A extending from the other axial end of the stator core 201 are bent and connected to ends of other segments 203 as shown in Fig. 7 to form the stator winding as a whole.

In Fig. 7, conductor members 2031, 2032 of conductor segments 203 are welded at edge portion 2051. This welding also softens the conductor members. Thus, the welding at edge portions 2052, 2053 and others connects and softens the conductor members of all the conductor segments 203 very easily.

As shown in Fig. 7, a half of straight conductor members 203A extends from the outer layer of slots 202 in one circumferential direction and the other half conductor members 203A extends from the inner layer of slots 202 in the other circumferential direction so that those conductor members 203A, 203B can be welded at the ends thereof. Accordingly, all the coil ends are spaced apart from one another in the circumferential and radial directions.

As shown in Fig. 8, the coil ends having U-turn portions 203B extend from the slot 202 and are spaced apart from one another.

In the second embodiment, all segments 203 are connected and softened only by the welding to have different hardnesses, thereby reducing vibration effectively

As stated, the coil ends are disposed on an axial end of the stator core 201 to be heated and softened by welding and other coil ends having U-turn portion are disposed on the other end of the stator core 201 with the hardness unchanged, so that an appropriate difference in the hardness in the axial direction can be provided to reduce the vibration effectively.

As shown in Fig. 9, U-turn portions 203B of the conductor segments 203 once hardened by the shaping process are further hardened when the U-turn shape is formed by the bending process, and the vibration can be further reduced. If the stator core 201 and the stator winding are deemed to be a cylindrical member, portions having the same hardness are disposed on the same circumferential plane, and axially different portions have different hardnesses, thereby providing a high vibration reduction effect. As shown in Fig. 7, welded portions 2051, 2052, 2053 and others can be easily inspected to know the result of the heating-and-softening process.

### [Other embodiments]

The coil ends on the side opposite the pulley can be heated instead of the coil ends on the pulley side according to the first embodiment.

In the first and second embodiments, the edge or end portions can be heated at a comparatively low temperature to prevent damage of the coating of conductor segments 203 by cooling the coil ends on the other side of the stator core.

Conductor segments 213 shown in Fig. 10 can be also used. Each of conductor segments 213 has a straight conductor member 213A, which is inserted into a slot in an axial direction from one end and is bent to cover a certain pitch at the other end thereof. Then each conductor member 213 is heated and connected by a welder to form a winding

The distribution of different hardnesses can be changed from that shown in Fig. 4. For example, it is also possible that the hardness of points b, c are not lowered as shown in Fig. 4 and only point a is softened as shown in Fig. 4.

## Claims

1. Rotary electric machine, comprising
a rotor (3) composed of magnetic poles (6) alternately disposed at equal intervals in the circumference direction thereof and
a stator (2) disposed opposite to said rotor (3) and being composed of a stator core (201) having windings (20) disposed in slots (202), said windings (20) comprising a conductor member (203A, 203B) extending in the axial direction of said rotor (3),
***characterized in that***
the hardness of said conductor member (203A, 203B) is changing along the length thereof in such a way that the hardness of the respective portions of said conductor member (203A, 203B) is increasing the closer they are to said slots (202).

2. Rotary electric machine according to claim 1, wherein said conductor member (203A, 203B) extends from said slots (202).

3. Rotary electric according to claim 1 or 2, wherein said conductor member (203A, 203B) is machined to be hardened, or heated to be softened.

4. Rotary electric machine according to one of claims 1-3, wherein said conductor member (203A, 203B) has portions which are machined and portions which are heated and softened.

5. Rotary electric machine according to one of claims 1-4, wherein said conductor member (203A, 203B) is disposed in said slots (202) after being hardened.

6. Rotary electric machine according to claim 5, wherein said conductor member (203A, 203B) comprises a deformed cross-section to be hardened.

7. Rotary electric machine according to claim 6, wherein said conductor members (203A, 203B) comprise a continuous wire having a portion extending from said slots (202) and being heated and softened.

8. Rotary electric machine according to claim 6, wherein said conductor member (203A, 203B) comprises a plurality of segments which are connected with one another at the ends thereof.

## Patentansprüche

1. Elektrische Drehmaschine, die aufweist:
einen Läufer (3), der aus Magnetpolen (6) besteht, die abwechselnd in gleichen Abständen in seiner Umfangsrichtung angeordnet sind, und
einen Ständer (2), der dem Läufer (3) gegenüberliegend angeordnet ist und aus einem Ständerkern (201) besteht, der in Schlitzen angeordnete Wicklungen (20) aufweist, wobei die Wicklungen (20) ein Leiterteil (203A, 203B) aufweisen, das sich in der Axialrichtung des Läufers (3) ausdehnt,
***dadurch gekennzeichnet, daß***
sich die Härte des Leiterteils (203A, 203B) entlang seiner Länge auf eine derartige Weise ändert, daß sich die Härte der jeweiligen Abschnitte des Leiterteils (203A, 203B) erhöht, je näher sie sich an den Schlitzen (202) befinden.

2. Elektrische Drehmaschine nach Anspruch 1, wobei sich das Leiterteil (203A, 203B) von den Schlitzen (202) ausdehnt.

3. Elektrische Drehmaschine nach Anspruch 1 oder 2, wobei das Leiterteil (203A, 203B) bearbeitet ist, um gehärtet zu sein, oder wärmebehandelt ist, um weich gemacht zu sein.

4. Elektrische Drehmaschine nach einem der Ansprüche 1 bis 3, wobei das Leiterteil (203A, 203B) bearbeitete Abschnitte und wärmebehandelte oder weich gemachte Abschnitte aufweist.

5. Elektrische Drehmaschine nach einem der Ansprüche 1 bis 4, wobei das Leiterteil (203A, 203B) in den Schlitzen (202) angeordnet wird, nachdem es gehärtet worden ist.

6. Elektrische Drehmaschine nach Anspruch 5, wobei das Leiterteil (203A, 203B) einen zu härtenden deformierten Querschnitt aufweist.

7. Elektrische Drehmaschine nach Anspruch 6, wobei die Leiterteile (203A, 203B) einen durchgängigen Draht aufweisen, der einen Abschnitt aufweist, der sich von den Schlitzen (202) ausdehnt und wärmebehandelt und weich gemacht ist.

8. Elektrische Drehmaschine nach Anspruch 6, wobei das Leiterteil (203A, 203B) eine Mehrzahl von Segmenten aufweist, welche an ihren Enden miteinander verbunden sind.

## Revendications

1. Machine électrique tournante, comprenant
un rotor (3) composé de pôles magnétiques (6) disposés alternativement à des intervalles égaux dans sa direction circonférentielle et
un stator (2) disposé opposé audit rotor (3) et étant constitué d'un noyau de stator (201) ayant des enroulements (20) disposés dans des encoches (202), lesdits enroulements (20) comprenant un élément conducteur (203A, 203B) s'étendant dans la direction axiale dudit rotor (3),
***caractérisé en ce que***
la dureté dudit élément conducteur (203A, 203B) est changée le long de sa longueur d'une manière telle que les parties respectives dudit élément conducteur (203A, 203B) sont plus dures lorsqu'elles sont plus près desdites encoches (202).

2. Machine électrique tournante selon la revendication 1, dans laquelle ledit élément conducteur (203A, 203B) s'étend depuis lesdites encoches (202).

3. Machine électrique tournante selon la revendication 1 ou 2, dans laquelle ledit élément conducteur (203A, 203B) est usiné pour être durci, ou chauffé pour être ramolli.

4. Machine électrique tournante selon l'une quelconque des revendications 1 à 3, dans laquelle ledit élément conducteur (203A, 203B) comporte des parties qui sont usinées et des parties qui sont chauffées et ramollies.

5. Machine électrique tournante selon l'une quelconque des revendications 1 à 4, dans laquelle ledit élément conducteur (203A, 2038) est disposé dans lesdites encoches (202) après avoir été durci.

6. Machine électrique tournante selon la revendication 5, dans laquelle ledit élément conducteur (203A, 203B) comprend une section transversale déformée qui doit être durcie.

7. Machine électrique tournante selon la revendication 6, dans laquelle lesdits éléments conducteurs (203A, 203B) comprennent un fil continu ayant une partie s'étendant depuis lesdites encoches (202) et étant chauffé et ramolli.

8. Machine électrique tournante selon la revendication 6, dans laquelle ledit élément conducteur (203A, 203B) comprend une pluralité de segments qui sont connectés les uns aux autres au niveau de leurs extrémités.
